Europäisches Patentamt

European Patent Office

Office européen des brevets

(19)

(11) Numéro de publication : **0 685 428 A1**

(12)

# DEMANDE DE BREVET EUROPEEN

(21) Numéro de dépôt : 95420138.0

(22) Date de dépôt : **29.05.95**

(51) Int. Cl.[6] : **C01B 33/025,** C07F 7/16

(30) Priorité : **31.05.94 FR 9406863**

(43) Date de publication de la demande :
**06.12.95 Bulletin 95/49**

(84) Etats contractants désignés :
**DE ES GB**

(71) Demandeur : **PECHINEY
ELECTROMETALLURGIE
Tour Manhattan
La Défense 2
6 Place de l'Iris
F-92400 Courbevoie (FR)**

(72) Inventeur : **Faure, Pierre
143, Route du Périmètre
F-74000 Annecy (FR)**
Inventeur : **Margaria, Thomas
73, avenue du Mont Blanc
F-74190 Passy (FR)**

(74) Mandataire : **Mougeot, Jean-Claude et al
PECHINEY
28, rue de Bonnel
F-69433 Lyon Cedex 03 (FR)**

(54) **Alliage de silicium pour la synthèse des alkyl ou aryl halogénosilanes contenant de l'aluminium, du calcium et du cuivre.**

(57)    L'invention concerne un alliage de silicium destiné à la synthèse des alkyl ou aryl halogénosilanes à l'aide de la réaction de ROCHOW, caractérisé par la composition suivante (en % en poids) :

$$0,05 < Al < 0,30$$
$$0,01 < Ca < 0,30$$
$$0,02 < O_2 < 0,20$$
$$0,10 < Fe < 0,50$$
$$0,01 < Ti < 0,15$$
$$x < Cu < 2 + x$$

avec $x = 3,2$ (% Ca) $+ 9,4$ (% Al)
reste silicium.
    L'alliage selon l'invention permet d'améliorer la réactivité et la sélectivité de la réaction.

EP 0 685 428 A1

## DOMAINE TECHNIQUE

L'invention concerne une qualité particulière d'alliage métallurgique à base de silicium, contenant de l'aluminium, du calcium et du cuivre sous forme de différentes phases dosées et réparties de façon contrôlée. Cette qualité est particulièrement adaptée à la réaction de synthèse des alkyl ou aryl halogénosilanes.

## ETAT DE LA TECHNIQUE

La synthèse des alkyl ou aryl halogénosilanes (désignés dans la suite par le terme "silanes") par réaction à une température de 250 à 350°C d'un hydrocarbure halogéné sur le silicium en présence d'un catalyseur à base de cuivre, est connue depuis le brevet US 2380995, délivré le 7 août 1945 à ROCHOW.

Le silicium utilisé dans la réaction de ROCHOW est le silicium métallurgique produit par carboréduction de la silice dans un four électrique à arc, puis affiné pour régler le taux de ses principaux éléments mineurs.

L'idée d'allier le cuivre au silicium métallurgique utilisé pour cette synthèse a été souvent avancée dans le passé.

Ainsi les travaux de P. TRAMBOUZE: "Contribution à l'étude du mécanisme de la synthèse des méthylchlorosilanes" Bulletin de la Société Chimique de France, n° 288, 1956, pp. 1756-1765, et de G.H. KOLSTER et al.: "The $\eta'$ and $\varepsilon'$ phase of the system copper-silicon as solid reactants in the synthesis of dimethyl-dichlorosilane" Recueil des Travaux de Chimie, vol. 83, 1964, pp. 737-751, ont montré que, dans ce cas, la phase active dans la réaction de ROCHOW était la phase $\eta'$ de l'alliage SiCu, basée sur $Cu_3Si$, laquelle peut être rendue présente soit sous forme d'un catalyseur mélangé à la poudre de silicium servant de matière première, soit en utilisant directement comme matière première un alliage SiCu contenant cette phase $\eta'$.

Le brevet SU 810707 de N.P. LOBUSEVICH décrit l'emploi d'un alliage SiCu contenant de 4 à 6% de cuivre comme masse de contact dans la réaction.

Le brevet EP 372918 d'ELKEM, relatif à une poudre de silicium produite par atomisation à l'aide d'un gaz, mentionne l'utilisation possible d'un alliage contenant (en poids) 0,25 à 0,55% de fer, 0,05 à 0,45% d'aluminium, 0,005 à 0,20% de calcium et 1 à 6% de cuivre.

La demande de brevet EP 494837 de la demanderesse concernant une poudre de silicium à faible oxydation superficielle, mentionne également la possibilité d'utiliser des alliages SiCu contenant de 1 à 8% de cuivre.

Le brevet US 5281739 de DOW CORNING décrit un procédé de préparation des silanes à l'aide d'un alliage SiCu contenant de 0,01 à 9% de cuivre débarrassé de son laitier. Il attribue à l'oxygène réparti dans la masse de l'alliage, sous forme d'inclusions de laitier, les fluctuations de rendement constatées dans la réaction de ROCHOW, et propose d'éliminer cet oxygène en ajoutant du cuivre au silicium liquide et en séparant le laitier jusqu'à une teneur en oxygène non précisée.

De fait, il a toujours été admis jusqu'ici, au vu du diagramme binaire Si-Cu, qu'il suffisait d'ajouter du cuivre dans le silicium liquide pour obtenir, lors de la solidification, les phases Si et $Cu_3Si$ sous la forme de silicium primaire et de l'eutectique constitué entre Si et la phase $\eta'$.

Or, les recherches de la demanderesse ont montré que l'obtention d'une productivité élevée dans la réaction de ROCHOW n'était pas liée de manière aussi simple à la baisse du taux d'oxygène et à l'augmentation du taux de cuivre dans l'alliage, mais tenait plus à la maîtrise des différents composés intermétalliques dans sa structure métallurgique, ces composés faisant intervenir, non seulement le cuivre, mais également l'aluminium et le calcium présents dans l'alliage.

## OBJET DE L'INVENTION

L'invention a pour objet un alliage de silicium destiné à la fabrication des alkyl ou aryl halogénosilanes caractérisé par la composition suivante:

0,05 < Al < 0,30% (en poids)
0,01 < Ca < 0,30
0,02 < $O_2$ < 0,20
0,10 < Fe < 0,50
0,01 < Ti < 0,15
x < Cu < 2 + x

avec

$$x = 3,2 \ (\% \ Ca) + 9,4 \ (\% \ Al)$$

reste silicium

## DESCRIPTION DE L'INVENTION

La réaction de ROCHOW, qui est à la base de l'industrie des silicones, se pratique généralement avec le chlorure de méthyle et conduit à un mélange de différents méthylchlorosilanes, dont le seul recherché est le diméthyldichlorosilane (D). La productivité de la réaction est donc le produit de deux facteurs: la quantité de silanes produite par unité de temps Q, appelée réactivité, et le taux $\alpha_2$ de D dans les silanes formés. L'objectif est d'obtenir à la fois une productivité $\alpha_2 Q$ élevée et une sélectivité maximale, c'est à dire un taux $\alpha_2$ le plus proche possible de 1.

En préparant des alliages de différentes compositions par fusion à partir de silicium métallurgique et de cuivre électrolytique et en étudiant la structure de ces alliages à l'état solide par microscopie électronique à balayage, on observe la présence de quatre composés intermétalliques à base de cuivre: $Cu_4SiAl$, $Cu_2Si_3Al$, $Cu_2Si_3Ca$ et $Cu_3Si$.

Or, en examinant les échantillons à teneur en cuivre croissante, on constate, contre toute attente, que la phase $Cu_3Si$ n'apparaît que lorsque la totalité des éléments aluminium et calcium sont engagés dans les composés intermétalliques correspondants et l'on n'obtient la phase $Cu_3Si$ que si la composition de l'alliage satisfait à la relation:

$$(\% \ Cu) > 3{,}2 \ (\% \ Ca) + 9{,}4 \ (\% \ Al)$$

Le titane et le fer présents à l'état de traces n'interviennent pas dans cette relation.

En soumettant les échantillons à un test de fabrication de silanes, on constate que les alliages dont la composition satisfait la relation (R) donnent de meilleurs résultats que les autres, tant pour la réactivité que pour la sélectivité. On constate par ailleurs que les alliages fortement surdosés en cuivre par rapport à la relation (R) ne conduisent pas à de meilleurs résultats que ceux satisfaisant à (R) mais avec un faible excès de cuivre.

Enfin, il apparaît que, contrairement à l'enseignement du brevet US 5281739, la teneur en oxygène de l'alliage n'a pas d'influence notable sur la réactivité et la sélectivité de la synthèse.

Ces observations, alliées à des considérations pratiques conduisant à prévoir une certaine marge de sécurité au dessus de la limite théorique, et économiques consistant à éviter tout excès inutile de cuivre, permettent de situer l'optimum de la teneur en cuivre autour de 1 + x avec:

$$x = 3{,}2 \ (\% \ Ca) + 9{,}4 \ (\% \ Al)$$

et le domaine de composition intéressant à:

$$x < (\% \ Cu) < 2 + x$$

et, de préférence:

$$x + 0{,}5 < (\% \ Cu) < 1{,}5 + x$$

Le cuivre est généralement introduit dans le silicium liquide sous forme métallique, par exemple à l'aide de copeaux ou autres déchets propres. Une partie du cuivre peut également provenir de l'électrode du four à arc, en particulier dans le cas où on utilise une électrode à autocuisson du type Söderberg, c'est à dire une électrode dans laquelle la pâte carbonée est cuite au cours de sa descente progressive dans le four à l'intérieur d'une virole cylindrique. Le choix d'une virole en cuivre à la place d'une virole en acier, habituellement utilisée dans les électrodes Söderberg, permet de réduire la teneur en fer de l'alliage et augmente sa teneur en cuivre. Pour que la pâte carbonée soit suffisamment cuite à la fin de sa descente, on a intérêt à utiliser des plaques de contact, appliquées contre les électrodes pour les alimenter en courant électrique, munies de dispositifs de refroidissement particuliers permettant de les maintenir à haute température, comme décrit dans la demande de brevet français n° 2697398 de la demanderesse.

L'alliage selon l'invention pourra être préparé sous forme de poudre par concassage de lingots et broyage sous atmosphère peu réactive, de manière à obtenir des particules à faible oxydation superficielle recouvertes d'une couche d'oxyde de moins de 2 nm d'épaisseur, comme décrit dans la demande de brevet EP 494837 de la demanderesse.

Il pourra également être obtenu par granulation, par exemple la granulation dans l'eau et sous atmosphère inerte avec utilisation d'une coupelle réfractaire sur laquelle le jet d'alliage liquide vient se briser en gouttelettes, qui tombent dans un récipient rempli d'eau où elles se solidifient, comme décrit dans la demande de brevet français n° 93-10257 du 20/08/1993 de la demanderesse. Il pourra également être atomisé sous gaz inerte. Le broyage et le stockage de la poudre se feront avantageusement à l'abri de l'air.

La microstructure de l'alliage sera , de préférence, contrôlée de manière à ce que l'ensemble des composés intermétalliques, contenant ou non du cuivre, soient sous forme de phases bien dispersées, comme décrit dans la demande de brevet français n° 94-02487 du 25/02/1994 de la demanderesse, c'est à dire que, lorsqu'une image de la microstructure obtenue au microscope électronique à balayage est traitée par binarisation entre une phase intermétallique et une matrice de silicium, puis dilatation des zones correspondant à la phase intermétallique avec une extension autour de ces zones de 10 microns, le rapport $S/S_0$ des fractions surfaciques de la phase intermétallique entre l'image dilatée et l'image avant dilatation est compris entre 20 et 40.

## EXEMPLES

### Exemple 1

On prépare par fusion en four à induction de cuivre électrolytique et de silicium métallurgique un alliage à 13% de Si correspondant à la composition de la phase η' du diagramme d'équilibre Si-Cu. Le produit obtenu est coulé, solidifié, broyé puis tamisé entre 50 et 160 microns.

D'autre part on prépare un silicium métallurgique tamisé entre 70 et 160 microns et sur lequel on dose (en poids):

| Al = 0,185 % | Ca = 0,105% | Fe = 0,32% |
|---|---|---|

On mélange 40 g de ce silicium avec 2,5 g de l'alliage SiCu et on effectue, sur le mélange obtenu un test de fabrication de silanes. Ce test consiste à placer la poudre de mélange, additionnée de 0,05 g de ZnO, dans un réacteur en verre de diamètre 30 mm muni d'un agitateur. On envoie dans le lit d'alliage agité du chlorure de méthyle au travers d'un disque de verre fritté. Le débit de chlorure de méthyle est maintenu constant à 3,6 $10^{-3}$ m³/h. Après chauffage du milieu réactionnel et démarrage de la réaction, la température du système est maintenue à 300°C.

Après 4 essais de ce type, on a les résultats moyens suivants:

| Q = 7,8 g/h | $\alpha_2$ = 83% |
|---|---|

### Exemple 2

Partant de silicium métallurgique liquide prélevé sur la production d'une poche de coulée industrielle, on effectue une addition de cuivre électrolytique en visant une teneur voisine de 0,7 x. Une fois l'alliage coulé et solidifié, on mesure les teneurs suivantes (en poids):

| Cu = 1,61% | Al = 0,181% | Ti = 0,031% |
|---|---|---|
| Ca = 0,120% | Fe = 0,33% | $O_2$ = 0,035% |

Sur cet alliage, on effectue le test de fabrication de silanes décrit à l'exemple précédent. Les résultats moyens sur 4 essais donnent:

| Q = 5,6 g/h | $\alpha_2$ = 73% |
|---|---|

Dans ce cas où x = 2,085% et (% Cu) = 0,77 x, on constate que la réactivité et la sélectivité sont plus faibles que dans le cas précédent où on a la phase intermétallique η'.

### Exemple 3

On opère comme dans l'exemple 2, mais en visant cette fois des teneurs en cuivre plus fortes. Pour celà, on effectue 3 additions successives de cuivre, suivies à chaque fois d'une coulée partielle du contenu de la poche.

On obtient ainsi 3 échantillons d'analyse suivante (% en poids):

| n° | Cu | Al | Ca | Fe | $O_2$ | x |
|---|---|---|---|---|---|---|
| 1 | 3,31 | 0,193 | 0,115 | 0,36 | 0,042 | 2,182 |
| 2 | 4,93 | 0,186 | 0,112 | 0,37 | 0,041 | 2,106 |
| 3 | 11,51 | 0,177 | 0,117 | 0,39 | 0,044 | 2,034 |

Le même test de fabrication de silanes qu'aux exemples précédents, répété 4 fois sur les 3 alliages précédents, a donné les résultats moyens suivants:

| n° | Q g/h | $\alpha_2$ (%) |
|----|-------|----------------|
| 1  | 8,0   | 88             |
| 2  | 8,2   | 87             |
| 3  | 8,3   | 85             |

L'échantillon n° 1, conforme à l'invention, présente une réactivité et une sélectivité nettement améliorées par rapport à celui de l'exemple 2. Les échantillons n° 2 et 3, bien que nettement surdosés en cuivre, n'améliorent pas leurs performances.

## Exemple 4

Les alliages de l'exemple 3 sont refondus en four à induction sous vide, puis coulés sous vide de façon à obtenir des produits présentant une teneur en oxygène dans la masse qui soit aussi basse que possible.
Les produits obtenus sont réanalysés et donnent les compositions suivantes (% en poids):

| n°  | Cu   | Al    | Ca    | Fe   | $O_2$ |
|-----|------|-------|-------|------|-------|
| 1'  | 0,92 | 0,191 | 0,107 | 0,42 | 0,017 |
| 2'  | 4,51 | 0,182 | 0,098 | 0,42 | 0,014 |
| 3'  | 9,72 | 0,170 | 0,102 | 0,43 | 0,015 |

Le test de fabrication de silanes effectué 4 fois avec chacun de ces alliages retraités, a donné les résultats moyens suivants:

| n°  | Q (g/h) | $\alpha_2$(%) |
|-----|---------|---------------|
| 1'  | 8,0     | 89            |
| 2'  | 8,3     | 87            |
| 3'  | 8,2     | 86            |

Compte tenu du niveau de précision des résultats, on ne peut conclure à aucune amélioration significative des performances liée à la baisse de la teneur en oxygène.

## Exemple 5

Partant de silicium métallurgique liquide prélevé en fabrication au niveau de la poche de coulée, on effectue une addition de cuivre en visant une teneur de 1 + x, soit 3,2% sachant qu'on vise Al = 0,20% et Ca = 0,10%.
On effectue sur le produit obtenu le test de fabrication de silanes et on recommence l'opération pendant 2 semaines consécutives du lundi au vendredi. On obtient les résultats suivants:

| Al | Ca | Cu | Fe | Ti | $O_2$ | Q | $\alpha_2$ |
|---|---|---|---|---|---|---|---|
| % | % | % | % | % | % | g/h | % |
| 0,214 | 0,107 | 3,52 | 0,34 | 0,030 | 0,045 | 8,02 | 89,3 |
| 0,187 | 0,098 | 3,41 | 0,37 | 0,029 | 0,047 | 8,17 | 87,6 |
| 0,193 | 0,092 | 3,27 | 0,32 | 0,032 | 0,041 | 7,81 | 87,9 |
| 0,207 | 0,109 | 3,11 | 0,34 | 0,034 | 0,037 | 7,87 | 88,9 |
| 0,198 | 0,104 | 3,27 | 0,35 | 0,031 | 0,053 | 8,21 | 88,3 |
| 0,213 | 0,112 | 3,45 | 0,36 | 0,029 | 0,030 | 8,07 | 87,2 |
| 0,194 | 0,088 | 3,28 | 0,39 | 0,030 | 0,063 | 8,12 | 88,4 |
| 0,189 | 0,094 | 3,07 | 0,43 | 0,029 | 0,047 | 7,98 | 86,8 |
| 0,208 | 0,103 | 3,15 | 0,32 | 0,031 | 0,052 | 7,95 | 87,7 |
| 0,208 | 0,105 | 3,23 | 0,34 | 0,031 | 0,048 | 8,33 | 88,6 |
| moyenne: | | | | | 0,046 | 8,05 | 88,1 |
| écart-type: | | | | | | 0,160 | 0,775 |

Le produit coulé qui n'a pas servi au test et qui est resté en morceaux est refondu au four à induction sous vide, recoulé sous vide puis broyé et de nouveau soumis au test de fabrication des silanes. On a obtenu les résultats suivants:

| Al | Ca | Cu | Fe | Ti | $O_2$ | Q | $a_2$ |
|---|---|---|---|---|---|---|---|
| % | % | % | % | % | % | g/h | % |
| 0,194 | 0,098 | 3,47 | 0,37 | 0,030 | 0,014 | 8,12 | 89,0 |
| 0,168 | 0,087 | 3,29 | 0,41 | 0,029 | 0,016 | 8,26 | 87,5 |
| 0,198 | 0,087 | 3,10 | 0,36 | 0,033 | 0,015 | 7,86 | 89,1 |
| 0,201 | 0,107 | 3,01 | 0,38 | 0,034 | 0,017 | 7,83 | 89,3 |
| 0,192 | 0,089 | 3,15 | 0,37 | 0,031 | 0,021 | 8,17 | 88,6 |
| 0,197 | 0,104 | 3,27 | 0,39 | 0,030 | 0,013 | 8,00 | 87,8 |
| 0,188 | 0,085 | 3,17 | 0,44 | 0,031 | 0,024 | 8,08 | 89,7 |
| 0,175 | 0,088 | 2,98 | 0,45 | 0,030 | 0,019 | 7,92 | 88,6 |
| 0,199 | 0,093 | 3,03 | 0,34 | 0,031 | 0,017 | 8,22 | 88,8 |
| 0,191 | 0,096 | 3,18 | 0,36 | 0,032 | 0,016 | 8,27 | 90,0 |
| moyenne: | | | | | 0,017 | 8,07 | 88,9 |
| écart-type: | | | | | | 0,163 | 0,773 |

On constate que, dans les deux cas, les moyennes et les écarts-types pour la réactivité et la sélectivité ne sont pas significativement différents et que l'affinage poussé en oxygène ne conduit ni à une augmentation de ces valeurs, ni à une réduction de leurs fluctuations.

## Revendications

**1)** Alliage de silicium destiné à la synthèse des alkyl et aryl halogénosilanes, caractérisé par la composition suivante (en % en poids):

$0,05 < Al < 0,30$

$0,01 < Ca < 0,30$

$0,02 < O_2 < 0,20$

$0,10 < Fe < 0,50$

$0,01 < Ti < 0,15$

$x < Cu < 2 + x$ avec

$$x = 3,2 \ (\% \ Ca) + 9,4 \ (\% \ Al)$$

reste silicium

**2)** Alliage de silicium selon la revendication 1, caractérisé en ce que $0,5 + x < Cu < 1,5 + x$

**3)** Alliage de silicium selon l'une des revendications 1 ou 2, caractérisé en ce qu'il est constitué d'une poudre de grains à faible oxydation superficielle recouverts d'une couche d'oxyde de moins de 2 nm d'épaisseur.

**4)** Alliage de silicium selon l'une quelconque des revendications précédentes, caractérisé en ce qu'il est préparé par granulation.

**5)** Alliage de silicium selon l'une quelconque des revendications 1 à 3, caractérisé en ce qu'il est préparé par atomisation.

**6)** Alliage de silicium selon l'une quelconque des revendications précédentes, caractérisé en ce qu'il est conditionné par broyage et stockage à l'abri de l'air.

**7)** Alliage de silicium selon l'une quelconque des revendications précédentes, caractérisé en ce que sa microstructure est contrôlée de telle manière que, lorsqu'une image de cette microstructure obtenue au microscope électronique à balayage est traitée par binarisation entre une phase intermétallique et une matrice de silicium, puis dilatation des zones correspondant à la phase intermétallique avec une extension autour de ces zones de 10 microns, le rapport $S/S_0$ des fractions surfaciques de la phase intermétallique entre l'image dilatée et l'image avant dilatation est compris entre 20 et 40.

**8)** Procédé de fabrication d'un alliage de silicium selon l'une quelconque des revendications 1 à 7 par réduction carbothermique de la silice au four à arc à l'aide d'une électrode à autocuisson de type Söderberg dans laquelle la pâte carbonée est cuite au cours de sa descente à l'intérieur d'une virole cylindrique, caractérisé en ce que la virole est en cuivre.

**9)** Procédé de fabrication selon la revendication 8, caractérisé en ce que le four à arc est muni de plaques de contact fonctionnant à haute température grâce à des moyens de refroidissement particuliers.

**Office européen des brevets**

# RAPPORT DE RECHERCHE EUROPEENNE

Numero de la demande

EP 95 42 0138

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | EP-A-0 372 918 (ELKEM A/S) <br> * revendications 1,3 * <br> --- | 1 | C01B33/025 <br> C07F7/16 |
| A,D | EP-A-0 494 837 (PECHINEY ELECTROMETALLURGIE) <br> * page 3, ligne 42 - ligne 45 * <br> --- | 1 | |
| A,D | DATABASE WPI <br> Week 8150 <br> Derwent Publications Ltd., London, GB; <br> AN 81-92408D <br> & SU-A-810 707 (LOBUSEVICH) , 7 Mars 1981 <br> * abrégé * <br> ----- | 1 | |

**DOMAINES TECHNIQUES RECHERCHES (Int.Cl.6)**

C01B
C07F

Le présent rapport a été établi pour toutes les revendications

| Lieu de la recherche | Date d'achèvement de la recherche | Examinateur |
|---|---|---|
| BERLIN | 12 Septembre 1995 | Clement, J-P |